(19) Europäisches Patentamt
European Patent Office
Office européen des brevets

(11) **EP 2 208 975 B1**

(12) **FASCICULE DE BREVET EUROPEEN**

(45) Date de publication et mention
de la délivrance du brevet:
**22.06.2011 Bulletin 2011/25**

(51) Int Cl.:
***G01J 5/20*** *(2006.01)*

(21) Numéro de dépôt: **10354002.7**

(22) Date de dépôt: **05.01.2010**

(54) **Procédé de fabrication d'un détecteur bolométrique**

Herstellungsverfahren eines bolometrischen Detektors

Fabrication method of a bolometric detector

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.01.2009 FR 0900215**

(43) Date de publication de la demande:
**21.07.2010 Bulletin 2010/29**

(73) Titulaire: **Commissariat à l'Énergie Atomique et aux Énergies Alternatives 75015 Paris (FR)**

(72) Inventeurs:
• **Ouvrier-Buffet, Jean-Louis 74320 Sevrier (FR)**
• **Dubarry, Christophe 38640 Claix (FR)**
• **Puech, Laurent 38100 Grenoble (FR)**

(74) Mandataire: **Dubreu, Sandrine et al Cabinet Hecké 10, rue d'Arménie Europole BP 1537 38025 Grenoble Cedex 1 (FR)**

(56) Documents cités:
**FR-A1- 2 864 065    FR-A1- 2 910 125**

## Description

### Domaine technique de l'invention

L'invention concerne un procédé de fabrication d'un détecteur bolométrique muni d'une membrane suspendue au-dessus d'un substrat par l'intermédiaire de bras d'isolation thermique fixés au substrat par des points d'ancrage, ladite membrane ayant une couche mince d'oxyde de fer semi-conductrice, sensible à la température.

### État de la technique

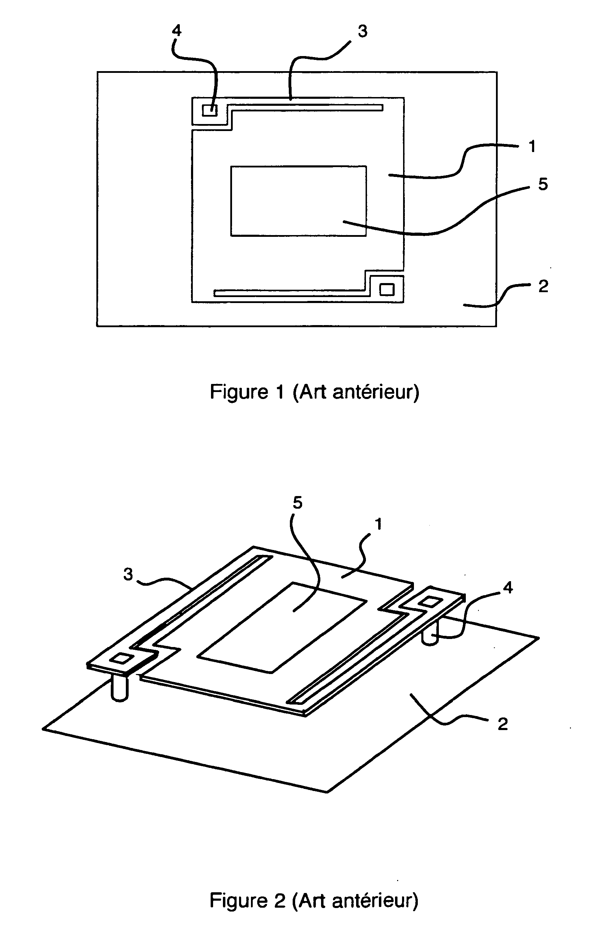

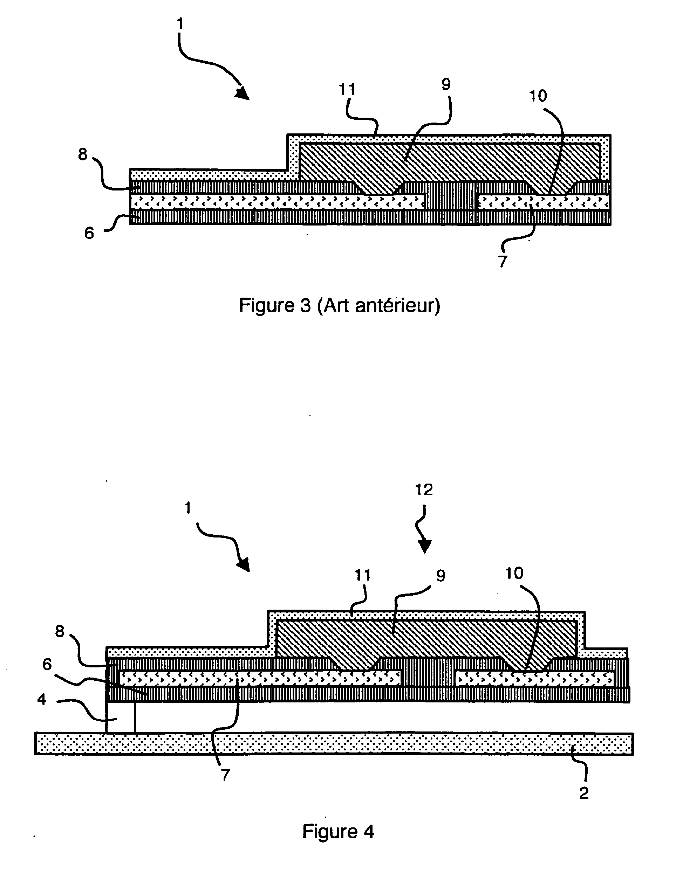

Les détecteurs bolométriques permettent de mesurer la puissance d'un rayonnement électromagnétique dans le domaine du térahertz ou des rayons infrarouges par conversion du rayonnement en signal électrique. La bande de fréquence des térahertz désigne les ondes électromagnétiques s'étendant environ entre 100 GHz et 30 THz. Comme illustré aux figures 1 et 2, dans le cas de détecteurs bolométriques de type résistif, le rayonnement électromagnétique est typiquement absorbé par une membrane 1 suspendue au-dessus d'un substrat 2 (figure 2) par l'intermédiaire de bras d'isolation thermique 3 fixés au substrat 2 par des points d'ancrage 4. La membrane 1 absorbe le rayonnement incident, le transforme en chaleur et transmet la chaleur à un thermistor 5. Le thermistor 5 est constitué d'un matériau semi-conducteur thermosensible, dont la caractéristique essentielle est de présenter une variation de résistance électrique lorsque sa température varie. Il peut s'agir, par exemple, d'oxyde de vanadium ($V_2O_5$, $VO_2$) élaboré dans une phase semi-conductrice. L'élévation de température du thermistor 5 induit alors une variation de tension ou de courant, aux bornes du détecteur bolométrique, mesurée par un montage électrique approprié. Des électrodes (non représentées) sont, par exemple, disposées au niveau des points d'ancrage 4. De façon conventionnelle, un circuit électronique est intégré au substrat 2 et assure l'exploitation des mesures réalisées. Les bras d'isolation thermique 3 isolent thermiquement la membrane 1 vis-à-vis du substrat 2 et améliorent ainsi la sensibilité de la mesure. Les documents FR2910125 et FR2864065 divulguent des détecteurs bolométriques comprenant une couche mince d'oxyde de fer semiconductrice à structure spinelle. La demanderesse a décrit dans le brevet US-A-2007120059 l'utilisation de ferrites à structure spinelle comme thermistor pour des dispositifs bolométriques non-refroidis de détection de l'infrarouge. Certains oxydes semi-conducteurs, à structure spinelle, de métaux de transition, à base de fer, possèdent une résistivité électrique modérée et sont très sensibles à la température. En particulier, les ferrites spinelles stoechiométriques ou lacunaires sont des produits dits à coefficient de température négatif c'est-à-dire ont une conductivité qui augmente avec la température. Un détecteur bolométrique représenté à la figure 3 est muni d'une membrane 1 constitué par la superposition d'une première couche mince diélectrique 6 sur laquelle sont disposées deux électrodes 7 coplanaires, d'une seconde couche mince diélectrique 8 et d'une couche mince de ferrite spinelle 9 constituant le thermistor. Les couches minces diélectriques 6 et 8 sont thermiquement conductrices de manière à transférer la chaleur absorbée par la membrane 1 au thermistor 5. La seconde couche mince diélectrique 8 est munie d'ouvertures de contact 10 de manière à mettre en contact la ferrite à structure spinelle 9 avec les électrodes 7. Une couche de passivation 11, formée sur la partie supérieure de la membrane (en haut sur la figure 3) permet de protéger la membrane 1.

La demanderesse a également divulgué dans sa demande de brevet WO2008084158 l'utilisation d'un thermistor constitué d'un matériau biphasé comportant une phase d'oxyde à structure spinelle et une phase de monoxyde de fer à structure de type chlorure de sodium NaCl. Cette association s'avère particulièrement efficace comme matériau sensible de dispositif bolométrique pour la détection de l'infrarouge.

### Objet de l'invention

L'objet de l'invention a pour but d'obtenir un détecteur bolométrique fonctionnalisé ayant une bonne sensibilité et optimisé en termes de signal sur bruit, selon un procédé de fabrication industrialisable, facile à mettre en oeuvre et peu coûteux.

Selon l'invention, ce but est atteint par un procédé de fabrication selon les revendications indexées. En particulier, ce but est atteint par le fait que le procédé comporte au moins une étape de réduction et/ou d'oxydation localisée(s) de la couche mince d'oxyde de fer semi-conductrice pour modifier le degré d'oxydation de l'atome de fer d'une partie de la couche mince d'oxyde de fer semi-conductrice.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- Les figures 1 et 2 représentent, schématiquement et respectivement en vue de dessus et en perspective, un détecteur bolométrique de l'art antérieur.
- La figure 3 représente, schématiquement et en coupe, la membrane de détecteur bolométrique selon la figure 1.
- La figure 4 représente, schématiquement et en coupe, un détecteur bolométrique selon un mode de réalisation particulier de l'invention.
- Les figures 5 à 9 représentent, schématiquement et en coupe, les différentes étapes du procédé de fabrication d'une membrane de détecteur bolométrique selon la figure 4.
- Les figures 10 et 11 représentent, schématiquement et en coupe, les différentes étapes d'une variante du procédé de fabrication d'une membrane de détecteur bolométrique selon la figure 4.
- La figure 12 représente, schématiquement et en vue de dessus, un détecteur bolométrique selon un second mode de réalisation particulier de l'invention.
- La figure 13 représente, schématiquement et en vue de dessus, un détecteur bolométrique selon un troisième mode de réalisation particulier de l'invention.
- Les figures 14 à 17 représentent, schématiquement et en coupe, les différentes étapes d'un procédé de fabrication du détecteur bolométrique selon la figure 13.

## Description des modes de réalisation particuliers de l'invention

Le détecteur bolométrique représenté à la figure 4 comporte classiquement une membrane 1, capable d'absorber le rayonnement infrarouge, suspendue au-dessus d'un substrat 2. La membrane 1 suspendue est réalisée par tout procédé connu, généralement, par un premier dépôt sur le substrat 2 d'une couche sacrificielle (non représentée), par exemple en polyimide, qui sert de support aux couches minces constituant la membrane 1. La couche sacrificielle a une épaisseur, de préférence, comprise entre 1 $\mu$m et 5 $\mu$m correspondant au quart de la longueur d'onde à détecter. Préalablement à la gravure de la couche sacrificielle, une couche de passivation 11 pourra, avantageusement, être formée sur la partie supérieure de la membrane 1 (en haut sur la figure 4) afin d'éviter toute réaction chimique lors de la gravure de la couche sacrificielle.

La membrane 1 est suspendue au-dessus du substrat 2 par l'intermédiaire de bras d'isolation thermique 3 fixés au substrat 2 par des points d'ancrage 4. Ces bras d'isolation thermique 3 limitent les pertes thermiques de la membrane 1 et améliorent ainsi la sensibilité de la détection thermique.

La membrane 1 comporte une couche mince d'oxyde de fer semi-conductrice 9, sensible à la température, formant un thermistor. La zone du détecteur bolométrique délimitée par cette couche mince d'oxyde de fer semi-conductrice 9 forme une planche bolométrique 12. Les oxydes de fer partiellement oxydés présentent une certaine résistivité, comprise entre 0,01 $\Omega$.cm et 1000 $\Omega$.cm. Les oxydes de fer partiellement oxydés tels que l'oxyde magnétique ou magnétite $Fe_3O_4$ à structure spinelle ainsi que l'oxyde ferreux ou wustite $Fe_{1-x}O$ lacunaire en Fer ont des propriétés semi-conductrices.

La couche mince d'oxyde de fer semi-conductrice 9 peut, être constituée de plusieurs phases d'oxyde de fer, le fer ayant des degrés d'oxydation différents $Fe^{2+}$, $Fe^{3+}$. En revanche, elle doit comporter au moins une phase d'oxyde de fer semi-conducteur, avantageusement, choisi parmi la magnétite $Fe_3O_4$ à structure spinelle ou la wustite $Fe_{1-x}O$ lacunaire en Fer.

La couche mince d'oxyde de fer semi-conductrice 9 peut également être au moins en partie à structure spinelle, par exemple, comporter une phase d'oxyde de fer à structure spinelle telle que la magnétite $Fe_3O_4$ semi-conductrice et/ou la maghémite $\gamma$-$Fe_2O_3$ isolante comme décrit dans le brevet US-A-2007120059. Ces oxydes de fer, hormis la maghémite $\gamma$-$Fe_2O_3$, présentent la particularité d'être partiellement oxydés et constitués d'un mélange de $Fe^{2+}$ et de $Fe^{3+}$. Cette caractéristique leur confère des propriétés intéressantes de semi-conducteur avec une résistivité électrique modérée et ces oxydes sont connus pour être sensibles à la température. Ils peuvent ainsi détecter des rayonnements infrarouges de faible intensité tout en minimisant le bruit électronique.

Comme décrit dans la demande de brevet WO2008084158, la couche mince d'oxyde de fer semi-conductrice 9 peut également être constituée de phases mixtes d'oxyde de fer semi-conducteur comme la magnétite $Fe_3O_4$ et/ou la wustite $Fe_{1-x}O$ lacunaire en Fer et d'oxyde de fer isolant comme l'oxyde ferrique $Fe_2O_3$ ou la wustite FeO non lacunaire en Fer. La répartition de chacune des phases est déterminée de façon à obtenir les meilleures performances possibles en matière de sensibilité et rapport signal /bruit.

La membrane 1 peut comporter une ou plusieurs couches diélectriques (6, 8), par exemple, de nitrure de silicium SiN, silice $SiO_2$, monoxyde de silicium SiO ou sulfure de zinc ZnS. La membrane 1 a une épaisseur, de préférence, comprise entre 0,01 $\mu$m et 2 $\mu$m.

L'irradiation de la membrane 1 entraîne un échauffement qui est transféré à la couche mince d'oxyde de fer semi-conductrice 9. Sous l'effet de la chaleur, la résistivité de la couche mince d'oxyde de fer semi-conductrice 9 varie. Cette variation peut être mesurée par l'intermédiaire des électrodes 7, reliées à un circuit de lecture (non représenté) approprié, sur le substrat 2.

Comme sur la figure 3, la membrane 1 de la figure 4 comporte, par exemple, une première couche mince diélectrique 6, une seconde couche mince diélectrique 8 et deux électrodes 7 coplanaires entre les première et seconde couches minces diélectriques 6 et 8. Les électrodes 7 se prolongent dans les bras d'isolation thermique 3 et passent par les points d'ancrage 4, pour être connectées au circuit de lecture sur le substrat 2. Des ouvertures de contact 10 formées dans la seconde couche mince diélectrique 8 permettent de connecter la couche d'oxyde de fer semi-conductrice 9 au circuit de lecture. Les deux électrodes 7 coplanaires sont, avantageusement, des électrodes métalliques, par exemple en titane Ti, nitrure de titane TiN, platine Pt ou NiCr.

Selon un mode de réalisation particulier, la membrane 1 est réalisée par dépôts successifs de couches minces selon tout procédé connu. Les dépôts sont réalisés préférentiellement à basse température, avantageusement, par pulvérisation cathodique ("sputtering") ou dépôt chimique en phase vapeur assisté plasma ("Plasma Enhanced Chemical Vapor Deposition ", PECVD).

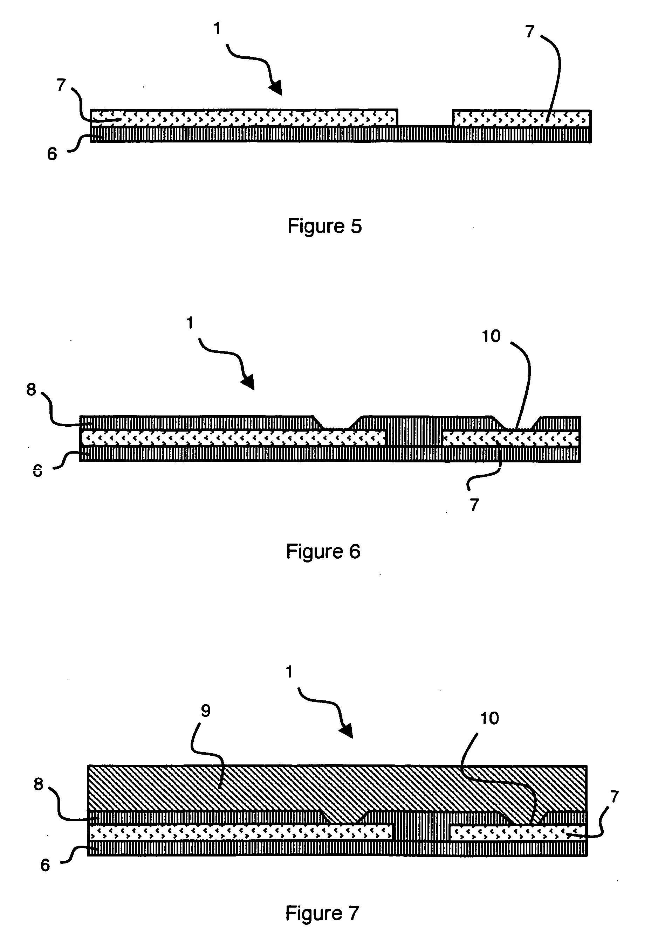

Comme représenté à la figure 5, les deux électrodes 7 coplanaires sont déposées sur la première couche diélectrique 6 par métallisation selon des procédés conventionnels. La forme des électrodes est obtenue par gravure chimique ou plasma. L'épaisseur des électrodes 7 est comprise entre $0,005\mu m$ et $0,1\mu m$. L'absorption du rayonnement IR par l'électrode 7 étant fonction du carré de sa résistance, l'épaisseur de l'électrode sera ajustée en fonction du taux d'absorption souhaité. Les électrodes 7 sont ensuite connectées au circuit de lecture sur le substrat 2 par des procédés classiques de reprise de contact.

Après dépôt de la seconde couche mince diélectrique 8, deux ouvertures de contact 10, représentées à la figure 6, sont gravées dans la seconde couche mince diélectrique 8 selon tout procédé connu.

Comme représenté à la figure 7, une couche mince d'oxyde de fer semi-conductrice 9 d'épaisseur comprise entre $0,01 \mu m$ et $2 \mu m$ est alors déposée sur la seconde couche mince diélectrique 8 pour recouvrir la totalité de la surface de la membrane 1. L'élaboration de la planche bolométrique 12 nécessite alors de graver sélectivement une partie de cette couche mince d'oxyde de fer semi-conductrice 9. Cette gravure est, avantageusement, réalisée par voie humide en utilisant une solution d'attaque acide. Les solutions d'attaque acide sont, par exemple, des solutions d'acide chlorhydrique HCl, d'acide nitrique $HNO_3$, d'acide sulfurique $H_2SO_4$ ou d'acide phosphorique $H_3PO_4$.

Afin de favoriser la gravure de la couche mince d'oxyde de fer semi-conductrice 9, la gravure par voie humide est activée en réduisant sous forme de fer ($Fe^0$), l'oxyde de fer de la partie de la couche mince semi-conductrice 9 devant être gravée. En effet, la gravure par voie humide est fortement inhibée par la présence de certaines phases d'oxyde de fer, notamment les oxydes ferriques $\alpha$-$Fe_2O_3$ ou $\gamma$-$Fe_2O_3$ dans une couche de magnétite $Fe_3O_4$ mais qui offre, par ailleurs, des propriétés de thermistor très intéressantes. Or, le fer au degré d'oxydation III Fe(III), le plus oxydé et constituant les oxydes ferriques, est connu pour être le fer le plus thermo-dynamiquement stable en milieu aqueux. La vitesse de gravure des oxydes ferriques est, par conséquent, plus faible que celle des oxydes de fer de degrés inférieurs. A l'opposé, la vitesse de gravure du fer est plus élevée que celle des oxydes de fer. Le fer métallique (Fe°) a une conductivité supérieure à $2.10^7$ $S.m^{-1}$.

Pour modifier le degré d'oxydation de l'atome de fer d'une partie de la couche mince d'oxyde de fer semi-conductrice 9, la couche mince d'oxyde de fer semi-conductrice 9 est réduite de façon localisée. La modification se traduit ici par une diminution du degré d'oxydation de l'atome de fer. Cette étape de réduction permet d'obtenir au moins une zone métallique en fer (14) plus facile à graver par attaque acide. Une solution moins concentrée d'acide peut, par conséquent, être utilisée pour graver le ou les zones métalliques en fer (14). La solution d'attaque acide, moins agressive, ne détériore pas un masque 13, définissant les motifs de gravure, généralement à base de résine ou de matériaux inorganiques. Cette étape de réduction permet donc de conserver l'intégrité des motifs du masque 13 et d'optimiser la gravure par voie humide en améliorant la sélectivité de la gravure et le contrôle de l'épaisseur de la gravure.

Selon une variante, afin de favoriser la gravure de la couche mince d'oxyde de fer semi-conductrice 9, la gravure par voie humide peut être activée en réduisant l'oxyde de fer de la partie de la couche mince semi-conductrice 9, devant être gravée, en fer de degré d'oxydation inférieur aux oxydes ferriques $Fe_2O_3$ trop stables, par exemple, en fer (II). La teneur en oxygène est globalement inférieure à la couche mince d'oxyde de fer semi-conductrice 9 initiale. La résistivité de la zone réduite est alors, de préférence, inférieure à $1\Omega.cm$.

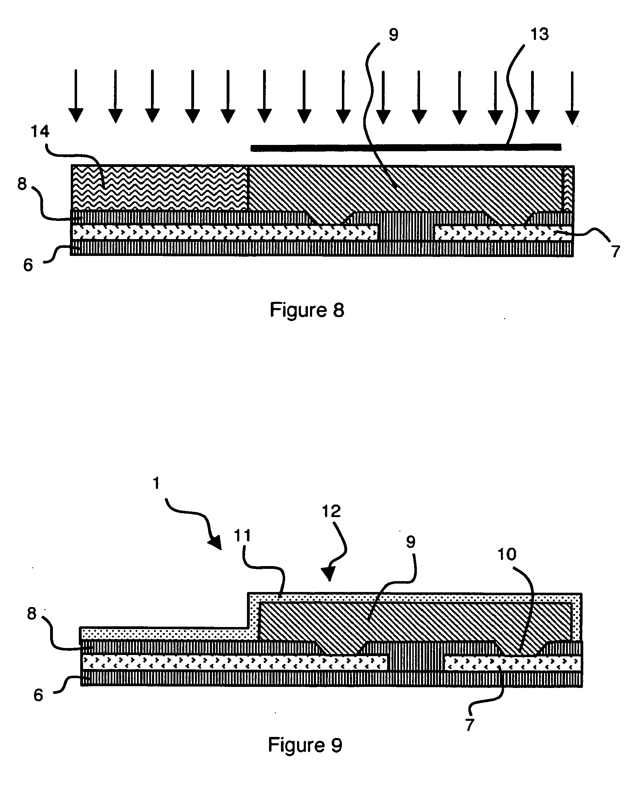

Comme représenté à la figure 8, le procédé de fabrication du détecteur bolométrique comporte, avantageusement, après le dépôt de la couche mince d'oxyde de fer semi-conductrice 9 sur la membrane 1, au moins une réduction localisée de la couche mince d'oxyde de fer semi-conductrice 9 à travers le masque 13 pour former au moins une zone métallique en fer 14.

Selon les conditions de la réduction, la réduction peut être réalisée sur toute l'épaisseur de la couche mince d'oxyde de fer semi-conductrice 9 ou uniquement en surface. Dans ce dernier cas, la présence du fer aura néanmoins un effet activateur de la gravure par voie humide.

La réduction localisée de la couche mince d'oxyde de fer semi-conductrice 9 est, de préférence, réalisée au moyen d'un réacteur utilisé pour la gravure plasma réactive ("reactive ion etching" noté RIE) sous pression réduite ou basse pression, de 1 à 100 mTorr, en présence d'au moins une espèce réductrice ou d'un gaz noble. Traditionnellement, un tel réacteur est destiné à la gravure assistée par un bombardement ionique important. Dans le cas de l'invention, un tel réacteur permet d'assurer un bombardement avec une densité importante, par exemple, sous flux d'argon ou de xénon. L'espèce réductrice peut être le plasma lui-même. Les plasmas réducteurs utilisés sont choisis, avantageusement, parmi l'hydrogène $H_2$ et les gaz nobles, par exemple, l'argon Ar, le xénon Xe et l'hélium He, ceux-ci pouvant permettre la réduction de l'oxyde de fer par pulvérisation préférentielle de l'oxygène.

Les conditions de bombardement ionique, par exemple, la masse des ions, leur énergie cinétique et leur angle d'incidence et la présence ou non d'espèce réductrice telle $H_2$, CO, ou NO, permettent de réduire les ions $Fe^{3+}$ en $Fe^{2+}$ puis en $Fe^0$ et $Fe^{2+}$ en $Fe^0$. En effet, le plasma généré peut libérer des ions $0^{2-}$ des oxydes de fer de la couche mince semi-conductrice 9 et réduire les ions $Fe^{3+}$ et $Fe^{2+}$ avec dégagement gazeux d'oxygène selon les réactions suivantes :

$$2Fe^{3+} + O^{2-} \rightarrow 2Fe^{2+} + \frac{1}{2}O_2$$

$$2Fe^{2+} + 2O^{2-} \rightarrow 2Fe^0 + O_2$$

Selon une variante, la réduction localisée peut être réalisée par recuit avec un masque dur. Le recuit est réalisé, de préférence, à une température inférieure à 300°C afin de ne pas altérer les composants présents éventuellement sur le substrat 2. Le masque 13 est une résine polymère ou en matériau inorganique adapté aux conditions du recuit. Un masque 13 à base de nitrure peut être utilisé de 300 à 1000 °C et un masque à base de résine photosensible poreuse peut être utilisé de 150 °C à 200 °C. Le masque 13 est déposé sur les zones de la couche mince d'oxyde de fer semi-conductrice 9 ne devant pas être réduites, formant ainsi une couche de passivation. Le recuit est effectué sous atmosphère réductrice c'est-à-dire en présence d'espèces réductrices, de préférence, choisies parmi l'hydrogène $H_2$, le monoxyde de carbone CO ou le monoxyde d'azote NO. Les zones exposées au flux d'espèces réductrices sont réduites sélectivement et de façon localisée.

Selon le diagramme d'Ellingham, la réduction des oxydes de fer obéit aux équilibres ci-dessous:

En présence d'hydrogène :

$$3 \, Fe_2O_3 + H_2 \leftrightarrow 2Fe_3O_4 + H_2O$$

$$\frac{1}{4}Fe_3O_4 + H_2 \leftrightarrow \frac{3}{4}Fe + H_2O$$

En présence de monoxyde de carbone :

$$3Fe_2O_3 + CO \leftrightarrow 2F_{e3}O_4 + CO_2$$

$$\frac{1}{4}Fe_3O_4 + CO \leftrightarrow \frac{3}{4}Fe + CO_2$$

Les équilibres ci-dessus prévoient une réduction aisée des oxydes de fer par CO ou $H_2$ sous atmosphère contrôlée et à des températures relativement basses. A titre d'exemple, le tableau ci-dessous répertorie le ratio des pressions partielles respectives de $H_2$ et de $H_2O$ $(p_{H2}/p_{H2O})^{éq}$, le ratio des pressions partielles respectives de CO et de $CO_2$ $(p_{CO}/p_{CO2})^{éq}$ pour les équilibres $Fe_2O_3/Fe_3O_4$ et $Fe_3O_4/Fe$ à une température de 25°C et 300°C.

| T=25°C | $(P_{H2}/p_{H2O})^{éq}$ | $(p_{CO}/p_{CO2})^{éq}$ |
|---|---|---|
| $Fe_2O_3/Fe_3O_4$ | $\sim10^{-7}$ | $<10^{-8}$ |
| $Fe_3O_4/Fe$ | $\sim10^4$ | $\sim1$ |

| T=300°C | $(P_{H2}/p_{H2O})^{éq}$ | $(p_{CO}/p_{CO2})^{éq}$ |
|---|---|---|
| $Fe_2O_3$ / $Fe_3O_4$ | $\sim10^{-6}$ | $\sim10^{-8}$ |
| $Fe_3O_4$ / Fe | $\sim10$ | $\sim1$ |

Bien que les réactions de réduction puissent être réalisées à une température de 25°C, une activation thermique est néanmoins nécessaire pour favoriser la diffusion des espèces réductrices $H_2$ et CO dans les couches minces d'oxyde de fer semi-conductrice 9. Cette élévation de température ne doit, toutefois, pas endommager les autres constituants du détecteur bolométrique, notamment le circuit de lecture du bolomètre présent sur le substrat 2.

Le ou les zones métalliques en fer 14 sont ensuite éliminées par gravure chimique sélective, à travers le même masque 13, un autre masque 13 ayant les mêmes motifs de gravure ou encore sans masque 13 selon tout procédé connu. Le ou les zones métalliques en fer 14 éliminées délimitent la planche bolométrique 12 (figure 9).

Une couche de passivation 11 représentée à la figure 9 est alors réalisée selon tout procédé connu, sur la partie supérieure de la membrane 1 (en haut sur la figure 9) avant l'élimination de la couche sacrificielle (non représentée) pour donner une structure suspendue de la membrane 1.

La membrane 1 est ensuite découpée mécaniquement au niveau des bras d'isolation thermique 3 pour définir la largeur et la longueur définitives des bras d'isolation thermique 3. La technique de découpe est, de préférence, identique à celle utilisée pour les circuits intégrés, la microélectronique ou les microsystèmes.

Selon un mode de réalisation particulier, la membrane 1 comporte au moins une électrode 7 à base de nitrure de titane TiN. A. Lussier et al, dans l'article « Characterization for strontium titinate/Fe3O4 and TiN/Fe34O4 interfaces» (J. Vac. Sci. Technol. B20 (4), Jul/Aug 2002, P. 1609 - 1613) révèle que le nitrure de titane TiN interagit avec les oxydes de fer, en particulier avec la magnétite $Fe_3O_4$, pour former une interface complexe constituée d'oxyde de titane $TiO_2$ et de wustite FeO. Or, le $TiO_2$ est un matériau électriquement isolant de même que la wustite FeO. Cette interface augmente la résistance de contact entre les électrodes 7 en nitrure de titane TiN et la couche mince d'oxyde de fer semi-conductrice 9. La sensibilité et le rapport signal/bruit sont alors affectés par l'existence d'une telle interface. Pour pallier à cet inconvénient et améliorer la qualité des contacts TiN / Oxyde de fer, au niveau des ouvertures de contact 10, le procédé de fabrication peut, avantageusement, comporter une étape de formation, par réduction localisée de la couche mince d'oxyde de fer semi-conductrice 9, d'une zone métallique en fer 14a en contact avec l'électrode 7.

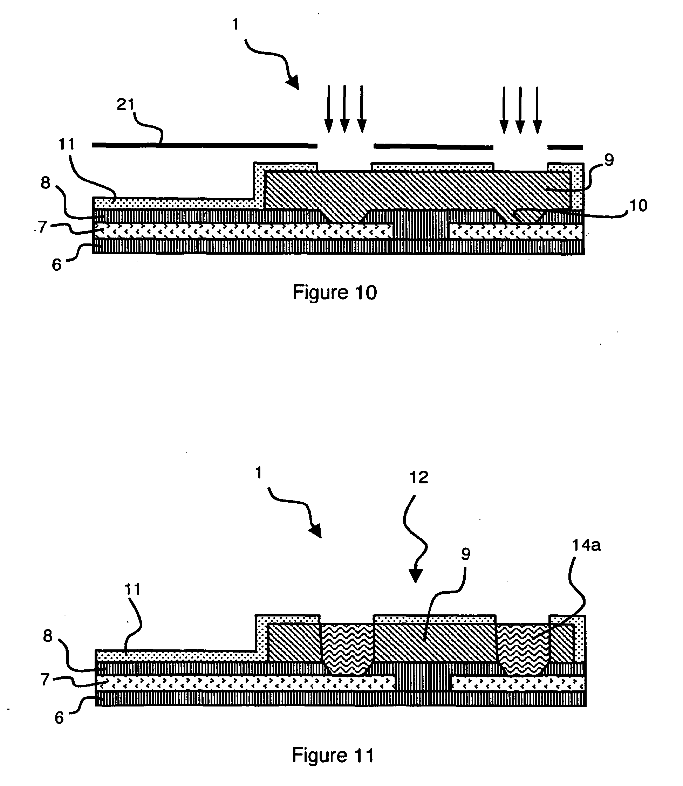

Comme représenté à la figure 10, la réduction localisée est alors réalisée après élimination de la couche de passivation 11 au niveau des zones à réduire. Les techniques de recuit ou de bombardement obtenu au moyen de la technique gravure plasma réactive (RIE) décrites ci-dessus peuvent être utilisées pour cette réduction localisée. La réduction localisée est effectuée, de préférence par RIE, à travers un masque 21 définissant des motifs de gravure correspondant aux ouvertures de contact 10 (figure 10). Les conditions d'irradiation par le plasma réducteur sont définies de façon à réduire la couche mince d'oxyde de fer semi-conductrice 9 sur la totalité de son épaisseur de sorte que la zone métallique en fer 14a ainsi obtenue soit traversante dans le sens de l'épaisseur de la couche mince d'oxyde de fer semi-conductrice 9 (figure 11). La zone métallique en fer 14a, en contact avec l'électrode 7, assure la connexion électrique et permet de diminuer fortement la résistance de contact électrode 7 / couche mince semi-conductrice 9.

La réduction localisée peut également atteindre l'électrode 7 à base de nitrure de titane TiN en modifiant les conditions de bombardement de la gravure plasma réactive, notamment en augmentant l'énergie cinétique des ions. L'électrode 7 à base de nitrure de titane TiN comporte alors au moins une zone métallique de titane Ti en contact avec la zone métallique en fer 14a de la couche mince d'oxyde de fer semi-conductrice 9.

Selon un mode de réalisation non illustré, le détecteur bolométrique peut également comprendre une pluralité de planches bolométriques 12 sous forme d'un réseau matriciel de pixels qui peut être connecté, par exemple, à une matrice CCD ou CMOS. Avec un système d'imagerie approprié, le dispositif constitue alors une caméra infrarouge.

Le dispositif bolométrique peut également être intégré dans une structure dite monolithique, fabriquée de manière collective par les procédés de la microélectronique qui ont été développés pour le silicium.

Des imageurs infrarouges monolithiques, fonctionnant à température ambiante peuvent, par exemple, être fabriqués en connectant directement le réseau matriciel de pixels à un circuit de multiplexage de type CMOS ou CCD. Le substrat 2 peut alors être constitué d'un circuit électronique intégré comprenant, d'une part, des dispositifs de stimuli et de lecture et, d'autre part, les composants de multiplexage qui permettent de sérialiser les signaux issus du réseau et de les transmettre vers un nombre réduit de sorties pour être exploités par un système d'imagerie usuel.

Le procédé de fabrication du détecteur bolométrique permet de réaliser des détecteurs bolométriques intégrant des filtres réfléchissants dans sa structure. De façon conventionnelle, des filtres peuvent être introduits sur le chemin optique du rayonnement infrarouge, en amont de la structure du détecteur bolométrique. Les filtres et le détecteur bolométrique constituent alors deux éléments indépendants.

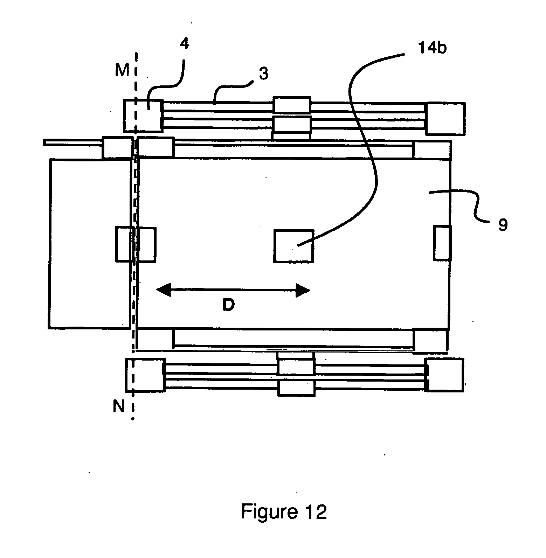

Selon un mode de réalisation particulier réprésenté à la figure 12, le procédé de fabrication d'un détecteur bolométrique comporte successivement, comme précédemment, la formation d'une membrane 1 suspendue au-dessus d'un substrat 2, le dépôt d'une couche mince d'oxyde de fer semi-conductrice 9 sur l'ensemble de la membrane 1 et la réduction localisée de la couche mince d'oxyde de fer semi-conductrice 9. La réduction localisée est réalisée de façon à former, simultanément ou successivement, plusieurs zones métalliques en fer 14b formant des motifs identiques répétitifs, selon l'une des deux techniques de recuit ou de bombardement par gravure plasma réactive décrites ci-dessus. Ces zones métalliques en fer 14b sont disposées de façon périodique, avec un pas D prédéterminé qui définit la fréquence de résonance du filtre. La zone métallique en fer 14b peut avoir des formes variées, par exemple, une forme ronde, carré ou en croix. Les zones métalliques en fer 14b forment ainsi un filtre réfléchissant à une certaine longueur d'onde. Les zones métalliques en fer 14b ont alors, de préférence, une conductivité inférieure à $1.10^6$ S.m$^{-1}$. La forme du motif va définir la largeur du filtre. Les longueurs d'ondes sensiblement supérieures ou inférieures à la longueur d'onde à réfléchir sont alors absorbées.

Comme représenté à la figure 12, plusieurs planches bolométriques 12 sont ensuite obtenues par découpage mécanique selon l'axe MN. Certaines zones métalliques en fer 14b sont alors scindées en deux. L'épaisseur de la découpe MN doit être suffisamment petite pour ne pas interférer avec le fonctionnement du filtre.

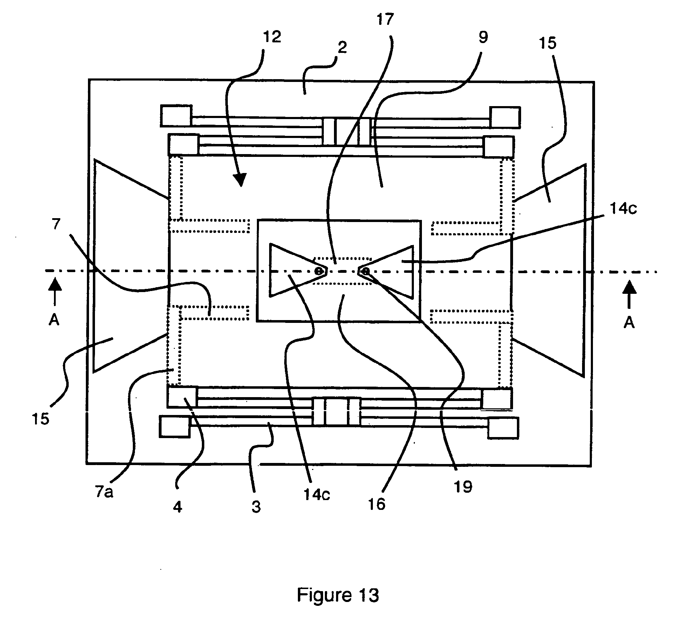

Le procédé de fabrication de détecteur bolométrique, selon un autre mode de réalisation particulier représenté à la figure 13, permet d'obtenir un détecteur bolométrique à structure capacitive adapté au domaine des térahertz. La bande de fréquence des térahertz est intermédiaire entre les fréquences radioélectriques des micro-ondes et les fréquences optiques de l'infrarouge. L'absorption étant égale au carré de la longueur d'onde à absorber $\lambda^2_{initiale}$, lorsque la surface de la planche bolométrique 12 est très inférieure à la valeur $\lambda^2_{initiale}$, la longueur d'onde ne peut pas être directement absorbée par la planche bolométrique 12. Un système d'antennes 15 disposé sur le substrat 2 est, par conséquent, généralement utilisé pour absorber des rayonnements électromagnétiques dont la longueur d'onde est comprise dans cette gamme. Les antennes 15 ont, de préférence, la forme de triangles isocèles ayant des bases parallèles et dont leur sommet opposé à leur base est orienté vers le centre du détecteur bolométrique. Pour la mesure de ce rayonnement, un couplage capacitif est alors, avantageusement, réalisé entre le système d'antennes 15 et la planche bolométrique 12.

Le couplage capacitif est, avantageusement, assuré par deux zones métalliques en fer 14c électriquement conductrices et les deux antennes 15 disposées sur le substrat 2. Les deux zones métalliques en fer 14 ont, de préférence, également une forme de triangles isocèles, ayant des bases parallèles aux bases des antennes et dont leur sommet 19 opposé à leur base est orienté vers le centre du détecteur bolométrique. Les deux zones métalliques en fer 14 sont isolées électriquement l'une de l'autre par une zone électriquement isolante et thermiquement conductrice formée d'une couche d'oxyde de fer totalement oxydé 16, d'oxyde ferrique $Fe_2O_3$ tel que le $\gamma Fe_2O_3$ ou l'hématite $\alpha$- $Fe_2O_3$. La couche d'oxyde de fer totalement oxydé 16 isole les deux zones métalliques en fer 14c afin d'éviter un court-circuit. Comme décrit ci-dessous, les sommets 19 des antennes 15 sont connectés par un élément résistif 17.

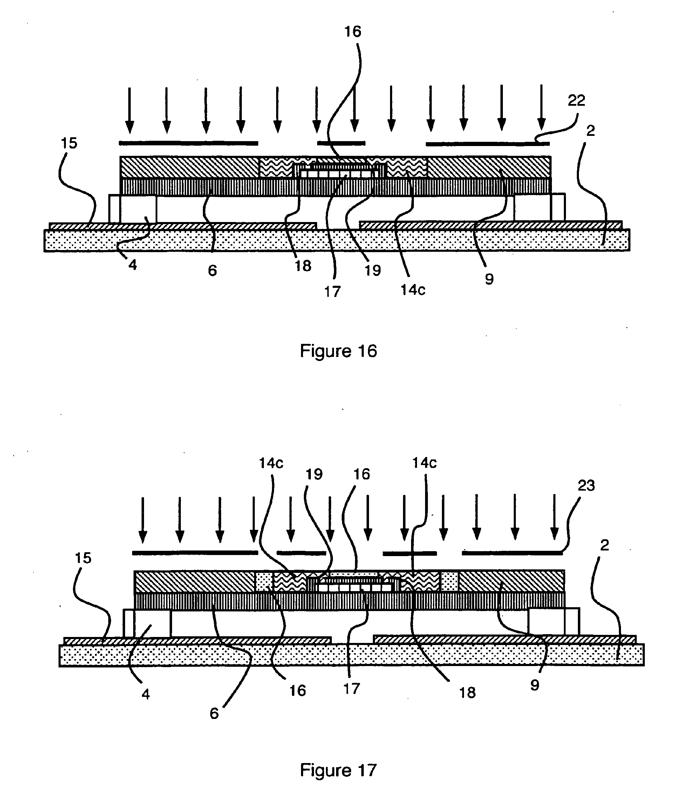

Comme représenté à la figure 17, le détecteur bolométrique comporte alors une membrane 1 suspendue au-dessus d'un substrat 2 muni des deux antennes 15. Sur la membrane 1 se trouve l'élément résistif 17 recouvert de la couche mince d'oxyde de fer semi-conductrice 9 formant le thermistor. L'élément résistif 17 est isolé électriquement par une couche diélectrique 18, de préférence, constituée de SiN, $SiO_2$, SiO ou ZnS. Une telle couche est thermiquement conductrice. Les deux zones métalliques en fer 14c sont disposées de part et d'autre de l'élément résistif 17 et connectées à celui-ci par des contacts réalisés aux sommets 19 des zones métalliques en fer 14c, à travers la couche mince diélectrique 18. L'absorption du rayonnement électromagnétique, plus particulièrement des térahertz, par les deux antennes 15 provoque une variation des charges électriques au niveau des antennes 15. Cette variation est mesurée par couplage capacitif avec les zones métalliques en fer 14c électriquement conductrices. Sous l'effet de ce couplage capacitif, un courant circule alors dans l'élément résistif 17 et induit l'échauffement de cet élément résistif 17. La couche diélectrique 18 thermiquement conductrice et la couche mince d'oxyde de fer totalement oxydé 16, électriquement isolante et thermiquement conductrice, transmettent la chaleur émise par l'élément résistif 17 jusqu'à la couche mince d'oxyde de fer semi-conductrice 9. L'absorption des térahertz provoque, par conséquent, une variation de la résistivité de la couche mince d'oxyde de fer semi-conductrice 9 sensible à la température.

Des électrodes 7, représentées à la figure 13, formées par exemple de nitrure de titane TiN, permettent de mesurer les variations de résistance de la couche mince d'oxyde de fer 9 et transmettent le signal au circuit de lecture présent sur le substrat 2, par l'intermédiaire des points d'ancrage 4. Dans le mode de réalisation particulier de la figure 13, quatre électrodes 7, chacune ayant deux branches 7a et 7b en forme de L, sont formées de façon symétrique par rapport au centre du détecteur bolométrique. Chaque électrode 7 comporte, sur le pourtour de la couche mince d'oxyde de fer semi-conductrice 9, une première branche 7a parallèle aux bases des antennes 15 et des zones métalliques en fer 14c. Les secondes branches 7b ne sont, en revanche, pas disposées sur le pourtour de la couche mince d'oxyde de fer semi-conductrice 9.

Le procédé de fabrication du détecteur bolométrique à structure capacitive selon les figures 13 à 17, comporte au moins une étape de réduction et/ou d'oxydation localisée(s) de la couche mince d'oxyde de fer semi-conductrice 9 pour modifier le degré d'oxydation de l'atome de fer d'une partie de la couche mince d'oxyde de fer semi-conductrice

7

9. Ainsi, des zones d'oxyde de fer isolant, de fer ou d'oxyde de fer partiellement oxydé pourront être obtenues avec des propriétés de conduction électrique et thermique différentes.

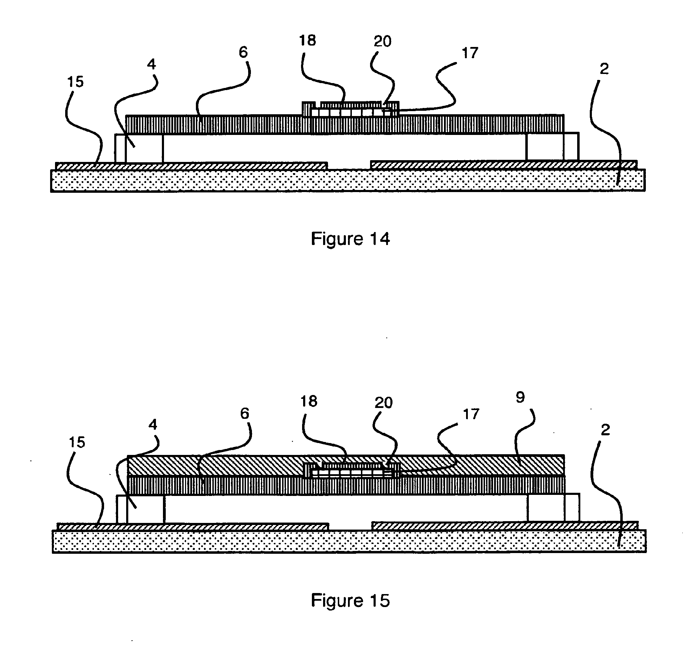

Plus particulièrement, le procédé comporte la formation d'une membrane 1 suspendue au-dessus d'un substrat 2 muni des antennes 15. Comme représenté à la figure 14, un élément résistif 17 est déposé sur une couche diélectrique 6 et recouvert d'une couche mince diélectrique 18. Deux ouvertures 20 sont réalisées dans la couche mince diélectrique 18 de façon à exposer deux zones de l'élément résistif 17.

Comme représenté à la figure 15, une couche mince d'oxyde de fer semi-conductrice 9 est déposée selon tout procédé connu sur la couche diélectrique 6 et sur l'élément résistif 17 recouvert de la couche mince diélectrique 18. Les ouvertures 20 sont remplies par la couche mince d'oxyde de fer semi-conductrice 9.

Les deux zones métalliques en fer 14c électriquement conductrices sont ensuite formées par réduction localisée à travers un masque 22, selon les techniques de recuit ou de bombardement obtenu au moyen de la technique de gravure plasma réactive décrites précédemment (figure 16). Chaque zone métallique en fer 14c est connectée à l'élément résistif 17 par un contact à son sommet 19. La position des zones métalliques en fer 14c est définie de façon à réaliser un couplage capacitif avec les antennes 15.

Comme représenté à la figure 17, une couche mince d'oxyde de fer totalement oxydé 16 est ensuite formée à travers un masque 23, par oxydation localisée de la couche mince d'oxyde de fer semi-conductrice 9 pour former une zone électriquement isolante et thermiquement conductrice entourant les deux zones métalliques en fer 14c et l'élément résistif 17. L'oxydation localisée isole les deux zones métalliques en fer 14c l'une de l'autre et évite le court-circuit. Les zones oxydées 16 ont alors, de préférence, une conductivité inférieure à $10^{-9}$ S.m$^{-1}$.

L'étape d'oxydation localisée de la couche mince d'oxyde de fer semi-conductrice 9 en couche d'oxyde de fer totalement oxydé 16 peut être effectuée par recuit à température inférieure à 300°C ou, avantageusement, par bombardement obtenu au moyen de la technique de gravure plasma réactive (RIE), en présence d'au moins une espèce oxydante comme l'oxygène $O_2$, le dioxyde de carbone $CO_2$ ou l'eau $H_2O$. La couche d'oxyde de fer totalement oxydé 16 est, avantageusement, à base d'oxyde ferrique $Fe_2O_3$.

À titre d'exemple, dans le cas d'un recuit, l'oxydation de la magnétite en présence d'oxygène obéit à l'équilibre ci-dessous:

$$2 \, Fe_3O_4 + \tfrac{1}{2} \, O_2 \leftrightarrow 3 \, Fe_2O_3$$

Dans le cas d'une gravure réactive plasma, le plasma oxydant est, par exemple, $O_2$, $CO_2$ ou $H_2O$. Le plasma est activé pour former des radicaux libres $O^{\bullet}$ ou $OH^{\bullet}$. Ces derniers réagissent avec la magnétite pour former de l'oxyde ferrique $Fe_2O_3$ isolant.

Selon une variante non représentée, le procédé de fabrication peut comporter une étape de réduction de la couche mince d'oxyde de fer semi-conductrice 9 pour former une zone métallique en fer 14c suivie d'une étape d'oxydation d'une partie de la zone métallique en fer 14c ainsi obtenue. L'oxydation de $Fe^0$ en $Fe^{3+}$ est alors réalisée, de préférence, par bombardement obtenu au moyen de la technique de gravure réactive plasma en présence d'une espèce oxydante.

Selon une autre variante non représentée, le procédé de fabrication peut comporter une étape d'oxydation localisée de la couche mince d'oxyde de fer semi-conductrice 9 pour modifier le degré d'oxydation de l'atome de fer d'une partie de la couche mince d'oxyde de fer semi-conductrice 9.

Les espèces oxydantes peuvent être introduites sous leur forme stable lors de l'étape d'oxydation, soit synthétisées in situ. À titre d'exemple, pour une réduction par gravure réactive plasma en présence d'hydrogène, il peut se former de l'eau, selon les conditions de la gravure, issue de la réaction entre les protons et l'oxygène de l'oxyde. L'eau ainsi formée in situ peut alors constituer l'espèce oxydante de l'étape d'oxydation ultérieure.

L'utilisation d'un thermistor à base de fer notamment d'oxyde de fer semi-conducteur 9 permet, lors du procédé de fabrication du détecteur bolométrique, d'alterner des étapes de réduction et d'oxydation formant ainsi des zones à base de fer ayant des propriétés de conduction électrique et thermique différentes. Ce procédé offre ainsi de nombreuses possibilités de fonctionnalisation et d'optimisation du détecteur bolométrique.

Les procédés décrits ci-dessus peuvent permettre d'améliorer les performances du détecteur bolométrique en optimisant le contact entre l'électrode 7 et la couche mince semi-conductrice 9 formant le thermistor ainsi que de fonctionnaliser les détecteurs pour des applications diverses notamment pour la détection de térahertz ou l'imagerie infrarouge. Les techniques employées notamment la gravure réactive plasma courante dans l'industrie de la microélectronique permettent une intégration industrielle facile et peu coûteuse.

**Revendications**

1. Procédé de fabrication d'un détecteur bolométrique muni d'une membrane (1) suspendue au-dessus d'un substrat (2) par l'intermédiaire de bras d'isolation thermique (3) fixés au substrat (2) par des points d'ancrage (4), ladite membrane (1) ayant une couche mince d'oxyde de fer semi-conductrice (9) sensible à la température, procédé **caractérisé en ce qu'**il comporte au moins une étape de réduction et/ou d'oxydation localisée(s) de la couche mince d'oxyde de fer semi-conductrice (9) pour modifier le degré d'oxydation de l'atome de fer d'une partie de la couche mince d'oxyde de fer semi-conductrice (9).

2. Procédé selon la revendication 1, **caractérisé en ce que** l'étape de réduction localisée de la couche mince d'oxyde de fer semi-conductrice (9) forme au moins une zone métallique en fer (14, 14a, 14b, 14c).

3. Procédé selon la revendication 2, **caractérisé en ce que** la réduction est un recuit, sous atmosphère réductrice, effectué à une température inférieure à 300°C.

4. Procédé selon la revendication 2, **caractérisé en ce que** la réduction est un bombardement obtenu au moyen de la technique de gravure plasma réactive en présence d'au moins une espèce réductrice ou d'un gaz noble.

5. Procédé selon l'une quelconque des revendications 1 à 4, **caractérisé en ce que** l'oxyde de fer est au moins en partie à structure spinelle.

6. Procédé selon l'une quelconque des revendications 1 à 5, **caractérisé en ce que** l'étape d'oxydation localisée de la couche mince d'oxyde de fer semi-conductrice (9) forme une couche mince d'oxyde de fer totalement oxydé (16).

7. Procédé selon la revendication 6, **caractérisé en ce que** la couche mince d'oxyde de fer totalement oxydé (16) est à base d'oxyde ferrique $Fe_2O_3$.

8. Procédé selon l'une quelconque des revendications 1 à 7, **caractérisé en ce que** l'étape d'oxydation localisée est un bombardement obtenu au moyen de la technique gravure plasma réactive en présence d'au moins une espèce oxydante.

9. Procédé selon l'une quelconque des revendications 1 à 8, **caractérisé en ce que** la membrane (1) comportant au moins une électrode (7) à base de nitrure de titane TiN, le procédé comporte la formation, par réduction localisée de la couche mince d'oxyde de fer semi-conductrice (9), d'une zone métallique en fer (14a) en contact avec l'électrode (7), ladite zone métallique en fer (14a) étant traversante dans le sens de l'épaisseur de la couche mince d'oxyde de fer semi-conductrice (9).

10. Procédé selon la revendication 9, **caractérisé en ce que** l'électrode (7) à base de nitrure de titane comporte une zone métallique de titane formée au cours de ladite réduction localisée et en contact avec la zone métallique en fer (14a) de la couche mince d'oxyde de fer semi-conductrice (9).

11. Procédé selon l'une quelconque des revendications 1 à 10, **caractérisé en ce qu'**il comporte la formation, par réduction localisée de la couche mince d'oxyde de fer semi-conductrice (9), de plusieurs zones métalliques en fer (14b) formant des motifs identiques répétitifs et disposées de façon périodique avec un pas (D) prédéterminé, lesdites zones métalliques en fer (14b) formant un filtre réfléchissant permettant de détecter des rayonnements électromagnétiques correspondant audit pas (D).

12. Procédé selon l'une quelconque des revendications 1 à 11, **caractérisé en ce que** le substrat (2) étant muni de deux antennes (15) et la couche mince d'oxyde de fer semi-conductrice (9) étant munie d'un élément résistif (16), le procédé comporte successivement :

  - la formation, par réduction localisée de la couche mince d'oxyde de fer semi-conductrice (9), de deux zones métalliques en fer (14c) électriquement conductrices, les zones (14c) étant connectées électriquement à l'élément résistif (17) et formant un couplage capacitif avec lesdites antennes (15), et
  - la formation, par oxydation localisée de la couche mince d'oxyde de fer semi-conductrice (9), d'une couche mince d'oxyde de fer totalement oxydé (16), formant une zone électriquement isolante et thermiquement conductrice entourant les deux zones métalliques en fer (14c) et l'élément résistif (17).

13. Procédé selon l'une quelconque des revendications 1 à 12, **caractérisé en ce qu'**il comporte successivement :

  - le dépôt d'une couche mince d'oxyde de fer semi-conductrice (9) sur ladite membrane (1),
  - la réduction localisée de la couche mince d'oxyde de fer semi-conductrice (9) à travers un masque (13) pour former au moins une zone métallique en fer (14) et,
- la gravure chimique sélective des zones métalliques en fer (14).

**Claims**

1. A method for manufacturing a bolometric detector equipped with a membrane (1) suspended above a substrate (2) by means of heat-insulating arms (3) fixed to the substrate (2) via anchoring points (4), said membrane (1) having a thin layer of heat-sensitive semiconducting iron oxide (9), a method **characterized in that** it comprises at least a step of localized reduction and/or oxidation of the thin layer of semiconducting iron oxide (9) to modify the degree of oxidation of the iron atom of a part of the thin layer of semiconducting iron oxide (9).

2. The method according to claim 1, **characterized in that** the step of localized reduction of the thin layer of semiconducting iron oxide (9) forms at least one metallic iron area (14, 14a, 14b, 14c).

3. The method according to claim 2, **characterized in that** reduction is an anneal, in a reducing atmosphere, performed at a temperature of less than 300°C.

4. The method according to claim 2, **characterized in that** reduction is a bombardment obtained by means of a reactive ion etching technique in the presence of at least one reducing species or a noble gas.

5. The method according to any one of claims 1 to 4, **characterized in that** the iron oxide is at least partly spinel-structured.

6. The method according to any one of claims 1 to 5, **characterized in that** the step of localized oxidation of the thin layer of semiconducting iron oxide (9) forms a thin layer of totally oxidized iron oxide (16).

7. The method according to claim 6, **characterized in that** the thin layer of totally oxidized iron oxide (16) has a ferric oxide $Fe_2O_3$ base.

8. The method according to any one of claims 1 to 7, **characterized in that** the step of localized oxidation is a bombardment obtained by means of a reactive ion etching technique in the presence of at least one oxidizing species.

9. The method according to any one of claims 1 to 8, **characterized in that** the membrane (1) comprising at least one titanium nitride TiN-based electrode (7), the method comprises formation of a metallic iron area (14a) in contact with the electrode (7), by localized reduction of the thin layer of semiconducting iron oxide (9), said metallic iron area (14a) being pass-through in the direction of the thickness of the thin layer of semiconducting iron oxide (9).

10. The method according to claim 9, **characterized in that** the titanium nitride based electrode (7) comprises a metallic titanium area formed during said localized reduction and in contact with the metallic iron area (14a) of the thin layer of semiconducting iron oxide (9).

11. The method according to any one of claims 1 to 10, **characterized in that** it comprises formation, by localized reduction of the thin layer of semiconducting iron oxide (9), of several metallic iron areas (14b) forming repetitive identical patterns and arranged in periodic manner with a predefined pitch (D), said metallic iron areas (14b) forming a reflecting filter enabling electromagnetic radiations corresponding to said pitch (D) to be detected.

12. The method according to any one of claims 1 to 11, **characterized in that** the substrate (2) being provided with two antennas (15) and the thin layer of semiconducting iron oxide (9) being provided with a resistive element (16), the method successively comprises:

   - formation of two electrically conducting metallic iron areas (14c), by localized reduction of the thin layer of semiconducting iron oxide (9), the areas (14c) being electrically connected to the resistive element (17) and forming a capacitive coupling with said antennas (15), and
   - formation, by localized oxidation of the thin layer of semiconducting iron oxide (9), of a thin layer of totally oxidized iron oxide (16) forming an electrically insulating and heat-conducting area surrounding the two metallic iron areas (14c) and the resistive element (17).

13. The method according to any one of claims 1 to 12, **characterized in that** it successively comprises:

- deposition of a thin layer of semiconducting iron oxide (9) on said membrane (1),
- localized reduction of the thin layer of semiconducting iron oxide (9) through a mask (13) to form at least one metallic iron area (14) and,
- selective chemical etching of the metallic iron areas (14).

**Patentansprüche**

1. Verfahren zur Herstellung eines bolometrischen Detektors, der mit einer Membran (1) ausgestattet ist, die auf dem Substrat (2) über Arme thermischer Isolation (3) aufgehängt ist, die an dem Substrat (2) durch Verankerungspunkte befestigt sind, wobei die Membran (1) eine halbleitende dünne Schicht (9) aus Eisenoxid hat, die temperaturempfindlich ist, wobei das Verfahren **dadurch gekennzeichnet ist, dass** es wenigstens einen Schritt lokalisierter Reduktion und/oder Oxidation der halbleitenden dünnen Schicht (9) aus Eisenoxid aufweist, um den Oxidationsgrad des Eisenatoms eines Teils der halbleitenden dünnen Schicht (9) aus Eisenoxid zu modifizieren.

2. Verfahren nach Anspruch 1, **dadurch gekennzeichnet, dass** der Schritt lokalisierter Reduktion der halbleitenden dünnen Schicht (9) aus Eisenoxid wenigstens eine metallische Zone aus Eisen (14, 14a, 14b, 14c) bildet.

3. Verfahren nach Anspruch 2, **dadurch gekennzeichnet, dass** die Reduktion ein Glühen unter reduzierenden Atmosphäre ist, das bei einer Temperatur unter 300°C durchgeführt wird.

4. Verfahren nach Anspruch 2, **dadurch gekennzeichnet, dass** die Reduktion ein Beschuss ist, der mittels der Technik das reaktiven Plasmaätzens in Gegenwart wenigstens einer reduzierenden Sorte oder eines Edelgases erhalten wird.

5. Verfahren nach einem der Ansprüche 1 bis 4, **dadurch gekennzeichnet, dass** das Eisenoxid wenigstens teilweise mit Spinell-Struktur vorliegt.

6. Verfahren nach einem der Ansprüche 1 bis 5, **dadurch gekennzeichnet, dass** der Schritt lokalisierter Reduktion der halbleitenden dünnen Schicht (9) aus Eisenoxid eine völlig oxidierte dünne Eisenoxidschicht bildet.

7. Verfahren nach Anspruch 6, **dadurch gekennzeichnet, dass** die völlig oxidierte dünne Schicht (16) auf der Basis von Eisenoxid $Fe_2O_3$ vorliegt.

8. Verfahren nach einem der Ansprüche 1 bis 7, **dadurch gekennzeichnet, dass** der Schritt lokalisierter Oxidation ein Beschuss ist, der mittels der Technik das reaktiven Plasmaätzens in Gegenwart wenigstens einer oxidierenden Sorte erhalten wird.

9. Verfahren nach einem der Ansprüche 1 bis 8, **dadurch gekennzeichnet, dass**, da die Membran (1) wenigstens eine Elektrode (7) auf der Basis von Titannitrid (TiN) aufweist, das Verfahren die Bildung einer metallischen Zone (14a) in Kontakt mit der Elektrode (7) durch lokalisierte Reduktion der halbleitenden dünnen Schicht (9) aus Eisenoxid umfasst, wobei die metallische Zone (14a) aus Eisen in Richtung der Dicke der halbleitenden dünnen Schicht (9) aus Eisenoxid durchdringend ist.

10. Verfahren nach Anspruch 9, **dadurch gekennzeichnet, dass** die Elektrode (7) auf Basis von Titannitrid eine metallische Zone aus Titan aufweist, die im Verlauf der lokalisierten Reduktion und in Kontakt mit der metallischen Zone (14a) aus Eisen der halbleitenden dünnen Schicht (9) aus Eisenoxid gebildet wird.

11. Verfahren nach einem der Ansprüche 1 bis 10, **dadurch gekennzeichnet, dass** es die Bildung mehrerer metallischen Zonen (14b) aus Eisen durch lokalisierte Reduktion der halbleitenden dünnen Schicht (9) aus Eisenoxid umfasst, die sich wiederholende identische Muster bilden und periodisch mit einem vorbestimmten Schritt (D) angeordnet sind, wobei die metallischen Zonen (14b) aus Eisen ein reflektierendes Filter bilden, das ermöglicht, elektromagnetische Strahlungen zu erfassen, die dem Schritt (D) entsprechen.

12. Verfahren nach einem der Ansprüche 1 bis 11, **dadurch gekennzeichnet, dass**, da das Substrat (2) mit zwei Antennen (15) ausgestattet ist und die halbleitende dünne Schicht (9) aus Eisenoxid mit einem resistiven Element (16) ausgestattet ist, das Verfahren nacheinander umfasst:

- die Bildung von zwei metallischen, elektrisch leitfähigen Zonen (14c) aus Eisen durch lokalisierte Reduktion der halbleitenden dünnen Schicht (9) aus Eisenoxid, wobei die Zonen (14c) elektrisch mit dem resistiven Element (17) verbunden sind und eine kapazitive Kopplung mit den Antennen (15) bilden, und
- die Bildung einer völlig oxidierten dünnen Schicht aus Eisenoxid durch lokalisierte Oxidation der halbleitenden dünnen Schicht (9) aus Eisenoxid, womit eine elektrisch isolierende und thermisch leitfähige Zone gebildet wird, welche die beiden metallischen Zonen aus Eisen (14c) und das resistive Element (17) umgibt.

**13.** Verfahren nach einem der Ansprüche 1 bis 12, **dadurch gekennzeichnet, dass** es nacheinander umfasst:

- Aufbringen einer halbleitenden dünnen Schicht (9) aus Eisenoxid auf die Membran (1),
- lokalisierte Reduktion der halbleitenden dünnen Schicht (9) aus Eisenoxid durch eine Maske (13), um wenigstens eine metallische Zone (14) aus Eisen zu bilden und
- selektives chemisches Ätzen der metallischen Zonen (14) aus Eisen.

Figure 1 (Art antérieur)

Figure 2 (Art antérieur)

Figure 3 (Art antérieur)

Figure 4

Figure 5

Figure 6

Figure 7

Figure 8

Figure 9

Figure 10

Figure 11

Figure 12

Figure 13

Figure 14

Figure 15

Figure 16

Figure 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910125
- FR 2864065
- US 2007120059 A
- WO 2008084158 A

**Littérature non-brevet citée dans la description**

- **A. Lussier et al.** Characterization for strontium titinate/Fe3O4 and TiN/Fe34O4 interfaces. *J. Vac. Sci. Technol.,* Juillet 2002, vol. B20 (4), 1609-1613